(19) Europäisches Patentamt
European Patent Office
Office européen des brevets

(11) EP 0 766 705 B1

(12) **EUROPEAN PATENT SPECIFICATION**

(45) Date of publication and mention of the grant of the patent:
**13.05.1998 Bulletin 1998/20**

(21) Application number: **94922468.7**

(22) Date of filing: **29.06.1994**

(51) Int Cl.6: **C08F 291/00**, A01N 25/10, C08F 293/00, A01N 25/30

(86) International application number:
**PCT/US94/07346**

(87) International publication number:
**WO 96/00251 (04.01.1996 Gazette 1996/02)**

(54) **PREPARATION OF AMPHIPATHIC GRAFT COPOLYMERS, COMPOSITIONS THEREOF, AND METHODS OF THEIR USE**

HERSTELLUNG VON AMPHIPATISCHEN PFROPFCOPOLYMEREN, ZUSAMMENSETZUNG DAVON UND DEREN VERWENDUNG

PREPARATION DE COPOLYMERS GREFFES AMPHIPATIQUES, COMPOSITIONS ET PROCEDES D'UTILISATION

(84) Designated Contracting States:
**AT BE CH DE DK ES FR GB GR IE IT LI LU MC NL PT SE**

(30) Priority: **24.06.1994 US 265601**

(43) Date of publication of application:
**09.04.1997 Bulletin 1997/15**

(73) Proprietor: **THE DOW CHEMICAL COMPANY**
**Midland, Michigan 48674 (US)**

(72) Inventors:
- **BOTT, Craig, J.**
  **Clare, MI 48617 (US)**
- **FISK, Thomas, E.**
  **Midland, MI 48640-2447 (US)**
- **PICKELMAN, Dale, M.**
  **Auburn, MI 48611 (US)**
- **WESSLING, Ritchie, A.**
  **Midland, MI 48640 (US)**

(74) Representative:
**Weiss, Wolfgang, Dipl.-Chem. Dr. et al**
**Patentanwälte**
**Weickmann & Partner,**
**Kopernikusstrasse 9**
**81679 München (DE)**

(56) References cited:

**EP-A- 0 244 145** **EP-A- 0 374 796**
**US-A- 4 337 185** **US-A- 4 427 819**

- **POLYMER JOURNAL, vol.17, no.1, 1985 pages 133 - 141 Y. CHUJO ET AL. 'Molecular Design of Interfacially Active Graft Copolymers by Macromonomer Method.' cited in the application**
- **JOURNAL OF POLYMER SCIENCE PART A : POLYMER CHEMISTRY EDITION, vol.32, 15 April 1994 pages 859 - 867 K. ISHIHARA ET AL. 'Synthesis of graft copolymers...'**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 766 705 B1

## Description

As shown in U.S. Patent 3,400,093, known methods for incorporating water-insoluble organic pesticides into water-based systems have been unsatisfactory in that the pesticides tend to settle out and do not remain uniformly dispersed in said systems. The patent further discloses a solution to that problem by employing emulsion polymerization of vinyl-type monomers in the presence of the pesticide. However, certain pesticides, such as chlorpyrifos and chlorpyrifos-methyl, tend to hydrolyze if heated to polymerization temperatures for extended periods of time and thus can not be used in this polymerized form. In addition, the presence of a pesticide in a monomer influences the polymerization to some degree, for example, the rate of polymerization, the conversion and/or the molecular weight of the polymer produced.

U.S. Patent 4,303,642 teaches that the above problems may be overcome by adding the pesticide to a finished latex wherein the polymeric particles are in a size range of from 0.03 to 20 microns. An increase in pesticide efficiency is demonstrated, although optimum stability and transfer of the pesticide through soil is not obtained.

U.S. Patent 4,512,969 discloses compositions containing loaded latex particles of from 0.02 to 0.2 micron in average diameter consisting essentially of loadable polymer particles. A hydrophobic insecticide, herbicide, miticide, hormone, vitamin, or enzyme is loaded into and distributed through the latex particles. The weight ratio of the hydrophobic compound to the loadable polymer particle is from 1:40 to 3:1.

U.S. Patent 5,188,824 discloses the preparation of a water dilutable emulsion concentrate of a water-insoluble organic pesticide which comprises an admixture of a water-insoluble organic pesticide and a water based structured particle latex composed of non-ionic particle cores to which is bound a stabilizing layer containing stabilizing pH independent ionic groups chemically bound at or near the surface of the polymer cores wherein the pesticide is present in a weight ratio of from 1:50 to 10:1 in terms of the pesticide to the particles of the structured particle latex.

U.S. Patent 5,089,259 discloses the preparation and use of stable, aqueous emulsion formulations of water-insoluble organic pesticides which are formed from a mixture of (1) a water-insoluble organic pesticide, (2) a structured particle latex containing non-ionic particles to which is bound a layer containing stabilizing pH independent ionic groups chemically bound at or near the particle surface of the polymer particles, and (3) optionally a co-solvent and/or a co-surfactant for the pesticide. The formulations are more stable to coalescence and freeze-thaw conditions than emulsions stabilized with conventional latex particles containing carboxyl or sulfonate groups.

Rogiers and Bognolo, Novel Trends in Dispersants, a paper presented at the Sixth International Congress of Pesticide Chemistry, Ottawa, Canada, August 10-15, 1986, reported on the stabilization of an Ethirincol suspension concentrate with a graft stabilizer of a polymethylmethacrylate-polymethacrylic acid backbone copolymer grafted with polyethylene oxide.

Soil pesticides are usually incorporated in the soil mechanically or are spread on the surface thereof to be leached into the soil by rainfall. In either case, the pesticide may not be able to function properly because it can become immobilized at the point of application. This will certainly be the case for large hydrophobic molecules and the problem can be compounded further if the carrier is itself a large hydrophobic particle.

In conventional formulations/compositions the surfactants are adsorbed on the particle surface and are in equilibrium with the aqueous phase and the surface of soil particles. Since the surface area is so large, the soil tends to act as an infinite sink of low surfactant concentration and much of the surfactant initially on the pesticide particle transfers to the soil, whereupon the pesticide particle either deposits on the soil or flocculates, thereby losing the ability to migrate through the soil.

The emulsion polymerization of hydrophobic monomers in the presence of an ionic pH independent hydrophilic reactive polymeric surfactant (RPS) to form a seed latex having a hydrophilic backbone polymer containing grafting sites to which is grafted a hydrophobic polymer is known and described in, for example, U.S. Patents 4,337,185 and 4,427,819.

In one method of producing structured particle latexes from these seed polymers, additional quantities of vinyl monomers are then added and emulsion polymerized to cause the particle of the seed to grow in size and attain the desired charge density. However, for the seed latex to function as a stabilizing layer at the growing particle surface, the polymeric hydrophilic/grafted hydrophobic composition must be substantially uncrosslinked, that is, must not be a microgel. This is accomplished by adjusting the initiator and chain transfer agent in both polymerization processes of the water soluble RPS composition and during the growth step to form the structured particle latex.

Non-aqueous emulsifiable concentrate formulations/compositions of water-insoluble organic pesticides are prepared with these high charge aqueous polymer colloids and an oil phase containing the pesticide, a hydrophobic oil diluent for the pesticide can be used, if necessary, a non-ionic surfactant, and if desired, a co-surfactant, as described in European Patent Applications EP 0 357 149 A2 and EP 0 357 796 A3. Such concentrates are prepared from an aqueous dispersion of the graft copolymer and are either water or oil-based depending on the water content. A water removal step is required when adequate polymer levels are incorporated to form dilutable emulsifiable concentrates (ECs). Aqueous dilutions from water-based and oil-based formulations result in oil-in-water emulsions having a particle

size of equal to or less than 200 nanometers (≥ 2,000 Angstroms (Å)).

It is known that the solubility of random copolymers varies with the relative proportion of its components. However, the solubility of graft copolymers is often unusually high especially if the two components have widely different polarities. The molecular structure of graft copolymers can influence its solubility behavior. The graft copolymers discussed in the following two references demonstrate the useful stabilization capabilities of water-insoluble organic materials emulsified in water.

Yoshiki Chujo et al. in Polymer Journal, Vol. 17, No. 1, pp. 133-141 (1985) describe the preparation of "comb-like" amphipathic graft copolymers by the macromonomer technique and their solubilization behavior with a water-insoluble organic material. Two types of graft copolymers were prepared: case (1) a hydrophilic ionic backbone with hydrophobic poly(methyl methacrylate) grafted branch segments and case (2) a hydrophobic poly(methyl methacrylate) backbone with hydrophilic ionic grafted segments. Both types are capable of solubilizing a water-insoluble organic material (dibenzyl used as the example) in a mixed acetone-water medium. The graft copolymer with the hydrophobic backbone and the hydrophilic ionic branches (case 2) produces more rigid micelles in a water rich medium than that of a (case 1) system. Case (1) type micelles have a large hydrophobic core with a thin stabilizing surface whereas case (2) micelles have the inverse situation: micelles with a small hydrophobic core with a large or thick stabilizing surface.

Kazuhiko Ishihara et al, in Journal of Polymer Science, Part A: Polymer Chemistry vol. 32, 15 April 1994, pp. 859-867 describe water-soluble graft copolymers with phospholipid groups which are made by the macromonomer method.

The AGRIMER ™ AL family of products (International Specialty Products, marketers of GAF Reg. TM products) are graft copolymers (alkylated adducts) of vinylpyrrolidone and alpha-olefins. These "comb-like" copolymers vary in HLB ranging from 4 to 20 depending on chain length of the alkyl group and the degree of alkylation. These low molecular weight copolymers range in solubility with water, alcohol, mineral oil, vegetable oil, and alkyl aromatics depending on polymer HLB. Further, these products are useful as antiflocculants for oil-based flowables and suspension concentrates and stabilizers for oil-in-water emulsions.

Composite resin particles each comprising a particulate crosslinked polymer to which a number of substantially linear, metal-containing polymer chains are chemically bonded are known and taught in EP 0 244 145. The particles have the properties of the metal element contained therein and are useful in the paint industry. These particles also have biological activity.

It is desirable to provide a substantially non-aqueous emulsifiable concentrate formulation/composition that yields particles of less than 500 nanometers (5000Å) which are smaller than heretofore available so as to improve the stability and application efficacy of dilutable concentrates of water-insoluble materials, especially water-insoluble organic pesticides.

The present invention provides a process for preparing amphipathic graft copolymers having a charge density of from 0.5 to 1.5 meq/gram polymer and a molecular weight of between 5,000 and 250,000, which comprises adding at least two ethylenically unsaturated hydrophobic monomers from the group consisting of alkyl acrylates, alkyl methacrylates and styrene compounds and at least one ethylenically unsaturated hydrophilic monomer from the group consisting of the sulfoalkylacrylates, the sulfoalkylmethacrylates, the acrylamidoalkylsulfonic acids, the methacrylamidoalkylsulfonic acids, the styrene sulfonates and the salts of said groups, vinyl substituted quaternary ammonium salts and vinylbenzyldialkyl sulfonium salts to a reaction medium, wherein at least one of the hydrophobic monomers is a graftable monomer and the hydrophilic monomers include at least one anionic and/or cationic pH independent functionality, or a post reactive non-ionic monomer that can be converted to a pH independent ionic derivative, said hydrophobic monomers are present in an weight ratio of from 1:1 to 10:1 of the hydrophobic monomers to the hydrophilic monomer, and free-radical polymerizing said monomers and recovering the thus prepared amphipathic graft copolymer in a solution containing less than 15 percent by weight water.

The present invention further provides a dilutable substantially non-aqueous agricultural pesticide concentrate formulation containing less than 15 percent water which is non-settling and freeze-thaw stable which comprises an amphipathic graft copolymer having a charge density of from 0.5 to 1.5 meq/gram polymer and a molecular weight of between 5,000 and 250,000, comprising a hydrophobic backbone copolymer prepared from at least two ethylenically unsaturated hydrophobic monomers from the group consisting of alkyl acrylates, alkyl methacrylates and styrene compounds, said hydrophobic backbone polymer containing grafting sites to which is grafted at least one ethylenically unsaturated hydrophilic monomer from the group consisting of the sulfoalkylacrylates, the sulfoalkylmethacrylates, the acrylamidoalkylsulfonic acids, the methacrylamidoalkylsulfonic acids, the styrene sulfonates and the salts of said groups, vinyl substituted quaternary ammonium salts and vinylbenzyldialkyl sulfonium salts containing stabilizing pH independent ionic groups, said hydrophobic monomers are present in an weight ratio of from 1:1 to 10:1 of the hydrophobic monomers to the hydrophilic monomer, a water-insoluble organic agricultural pesticide, a compatibilizing agent for the pesticide and a non-ionic surfactant, said formulation when diluted in water forms an oil-in-water emulsion wherein the particle sizes of said emulsion are less than 500 nanometers (5000Å).

The present invention further provides a water-diluted agricultural pesticide formulation which comprises a mixture

of an amphipathic graft copolymer having a charge density of from 0.5 to 1.5 meq/gram polymer and a molecular weight of between 5,000 and 250,000, comprising a hydrophobic backbone copolymer prepared from at least two ethylenically unsaturated hydrophobic monomers from the group consisting of alkyl acrylates, alkyl methacrylates and styrene compounds, said polymer containing grafting sites to which is grafted at least one ethylenically unsaturated hydrophilic monomer from the group consisting of the sulfoalkylacrylates, the sulfoalkylmethacrylates, the acrylamidoalkylsulfonic acids, the methacrylamidoalkylsulfonic acids, the styrene sulfonates and the salts of said groups, vinyl substituted quaternary ammonium salts and vinylbenzyldialkyl sulfonium salts containing stabilizing pH independent ionic groups, said hydrophobic monomers are present in an weight ratio of from 1:1 to 10:1 of the hydrophobic monomers to the hydrophilic monomer, a water-insoluble organic agricultural pesticide, a compatibilizing agent for the pesticide, a non-ionic surfactant and water, said water diluted formulation being non-settling and freeze-thaw stable and wherein the particle sizes of the thus formed oil-in-water emulsion are less than 500 nanometers (5000Å).

In addition, the present invention provides a method for the use of water-diluted formulations/compositions of the above dilutable substantially non-aqueous formulation/compositions in the kill and control of various pests. The present invention also provides a method for the kill and control of agricultural pests in their growth environments which comprises contacting said pests or their environments with a pesticidally effective amount of an aqueous dilution of the above formulation/composition.

In particular, the present invention provides a method for the control of the growth of agricultural pests in foliar and soil environments which comprises contacting said pests and their foliar and soil environments with a pesticidally effective amount of an aqueous formulation which comprises a mixture of water and a water-insoluble organic pesticide with a compatibilizing agent for the pesticide, an amphipathic graft copolymer having a charge density of from 0.5 to 1.5 meq/gram polymer and a molecular weight of between 5,000 and 250,000, comprising a hydrophobic backbone copolymer prepared from at least two ethylenically unsaturated hydrophobic monomers from the group consisting of alkyl acrylates, alkyl methacrylates and styrene compounds, said polymer containing grafting sites to which is grafted at least one ethylenically unsaturated hydrophilic monomer from the group consisting of the sulfoalkylacrylates, the sulfoalkylmethacrylates, the acrylamidoalkylsulfonic acids, the methacrylamidoalkylsulfonic acids, the styrene sulfonates and the salts of said groups, vinyl substituted quaternary ammonium salts and vinylbenzyldialkyl sulfonium salts containing stabilizing pH independent ionic groups, said hydrophobic monomers are present in an weight ratio of from 1:1 to 10:1 of the hydrophobic monomers to the hydrophilic monomer and a non-ionic surfactant.

The present invention further provides a method of packaging substantially non-aqueous formulations for safe and convenient handling which comprises confining within a bag composed of at least partially water-soluble material, a pesticidal concentrate formulation as defined in Claim 6.

Preferred embodiments of the invention are given in the dependent claims.

The amphipathic graft copolymers are prepared employing free-radical polymerization procedures, in a reaction medium, at least two hydrophobic monomers and at least one hydrophilic monomer, wherein at least one of the hydrophobic monomers is a graftable monomer and the hydrophilic monomers include at least one anionic and/or cationic functionality, or a post reactive non-ionic monomer that can be converted to a pH independent ionic derivative, and recovering the thus prepared amphipathic graft copolymer in a solution containing less than 15 percent by weight water.

The present process provides product amphipathic graft copolymers having charge densities of 0.5 to 1.5 meq/gram polymer. The copolymer molecular weights are less than 250,000, preferably less than 50,000, and most preferably less than 35,000, and greater than 5,000.

It is important that the hydrophobic monomers are added to the polymerization medium first and the polymerization thereof initiated prior to the addition of the hydrophilic monomers. When using the reverse order of reactant addition in this process, that is, making copolymers with a hydrophilic backbone and hydrophobic grafts, one obtains an unusable gel. This gel product, even though it may be crosslinked, cannot be easily formulated, that is, a non-homogeneous formulation/composition would occur. Thus formulations/compositions made using the gel settle and are not freeze-thaw stable such as those of the instant invention.

In the present specification and claims, the term "stable", "freeze-thaw stable" or the like indicates that the formulation/composition being discussed is not subject to phase separation and passes the hereinafter set forth freeze-thaw test.

In the present specification and claims, the term "thermal fluctuation" or the like indicates that the formulation/composition being discussed is not subject to phase separation during storage under varying temperature conditions.

In addition, a method of packaging such dilutable substantially non-aqueous formulations/compositions for safe and convenient handling is provided for. This method provides for producing formulations/compositions in a form which allows for ease in pesticide application by confining said dilutable substantially non-aqueous concentrate formulation/composition within a bag wherein the container wall is polymeric film which is soluble in an aqueous medium. When the bag is added to an aqueous medium in a tank, the bag dissolves and the concentrate formulation/composition mixes to form a ready-to-use diluted formulation/composition.

The present invention provides amphipathic graft copolymers comprised of backbone hydrophobic polymers prepared from at least two hydrophobic monomers, at least one of which contains grafting sites to which is grafted a hydrophilic polymer prepared from at least one hydrophilic monomer containing pH independent ionic groups.

The amphipathic graft copolymers are prepared by adding at least two hydrophobic monomers and at least one hydrophilic monomer to a reaction medium, wherein at least one of the hydrophobic monomers is a graftable monomer and the hydrophilic monomers include at least one anionic and/or cationic functionality, or a post reactive non-ionic monomer that can be converted to a pH independent ionic derivative, and free-radical polymerizing said monomers and recovering the thus prepared amphipathic graft copolymer in a solution which contains less than 15 percent by weight water.

The amphipathic graft copolymers can also be prepared employing a procedure which comprises simultaneously adding at least two hydrophobic monomers wherein at least one of the monomers is a graftable monomer and hydrophilic monomers, including at least one anionic and/or cationic ionic monomer, or a post reactive non-ionic monomer that can be converted to a pH independent ionic derivative, to a reaction medium and free-radical polymerizing said monomers and recovering the thus prepared amphipathic graft copolymer in a solution containing less than 15 percent by weight water.

The amphipathic graft copolymers can further be prepared employing a procedure which comprises starting the addition of at least two hydrophobic monomers, wherein at least one of the monomers is a graftable monomer, to a reaction medium and then starting the addition of hydrophilic monomers, including at least one anionic and/or cationic ionic monomer, or a post reactive non-ionic monomer that can be converted to a pH independent ionic derivative thereto, free-radical polymerizing said monomers and recovering the thus prepared amphipathic graft copolymer in a solution containing less than 15 percent by weight water.

The amphipathic graft copolymer compositions, can also be prepared by free-radical polymerizing in a first stage, a solution comprising at least two hydrophobic monomers including aliphatic, aromatic, and graftable types, non-ionic surfactants and/or organic solvents which are compatible for solution polymerization and then copolymerizing under free-radical polymerization conditions in a second stage, hydrophilic monomers, including at least one anionic and/or cationic ionic monomer, or a post reactive non-ionic monomer that can be converted to a pH independent ionic derivative, in the presence of said first stage polymerization product mixture and recovering the thus produced copolymer product solution containing less than 15 percent by weight water.

In the present specification and claims, the term "amphipathic" is used to denote copolymers having both hydrophobic and hydrophilic components in the same molecule. The use of this term and its definition is taught by Irja Piirma in Polymeric Surfactants, Surfactant Science Series, Vol. 42, p. 18, 1992.

The free-radical polymerization reaction for preparing the amphipathic graft copolymers of the present invention is conducted by adding at least two hydrophobic monomers and at least one hydrophilic monomer to a reaction medium at a temperature of from 70 to 110°C, or more, under an inert atmosphere of nitrogen. In this operation, the reactants can be simultaneously added or after partial reaction of the hydrophobic monomers, the hydrophilic monomer is added to reaction mixture and the polymerization reaction continued to the completion of the reaction. The reaction is usually complete in a period of from 2 to 8 hours, or more.

The polymerization reaction employed for preparing the amphipathic graft copoiymers of the present invention is preferably conducted in two stages employing conventional solution polymerization reaction conditions. In the first stage, the reaction is conducted at a temperature of from 70 to 110°C under an inert atmosphere of nitrogen. The reaction is comolete in a period of from 2 to 6 hours, or more. The products of the first stage are usually not separated and are used in the second stage without purification. The second stage is conducted at a temperature of from 70 to 110°C and the reaction is also complete in a period of from 2 to 6 hours, or more.

After the completion of the polymerization reaction, the reaction mixture is cooled and the amphipathic graft copolymer product thus produced can be used without purification or, if desired, the product can be purified to remove residual volatiles by conventional treatments such as steam and/or vacuum distillation.

The preferred procedure for making the hydrophobic/hydrophilic amphipathic graft copolymers of the present invention is to solution/free-radical polymerize at least two hydrophobic monomers including a graftable comonomer and then solution/free-radical copolymerize the thus formed polymer with hydrophilic monomers in a solvent and/or non-ionic surfactant medium containing a limited amount of water.

The hydrophobic monomer reactant and the hydrophilic monomer reactant are present in the reaction medium in the weight ratio of from 1:1 to 10:1 and preferably from 3:1 to 10:1 of the hydrophobic monomer to the hydrophilic monomer.

The hydrophobic ethylenically unsaturated monomers useful in this invention are suitably derived from any copolymerizable ethylenically unsaturated monomer, which, when in the form of an amorphous homopolymer, would have a solubility in water of less than 0.1 percent.

Representative hydrophobic monomers include: hydrocarbon monomers such as the styrene compounds, for example, styrene, alpha methylstyrene, ring substituted methylstyrene, ring substituted ethylstyrene, ring substituted dimethylstyrene, ring substituted dimethylstyrene and t-butylstyrene; the conjugated dienes, for example, butadiene,

and isoprene; the hydrocarbon monomers which are modified to possess non-ionic substituents, for example, hydroxystyrene, methoxystyrene and cyanostyrene; the unsaturated alcohol esters such as vinyl acetate and vinyl propionate; the unsaturated ketones, for example, vinyl methyl ketone and methyl isopropenyl ketone; the unsaturated ethers, for example, vinyl ethyl ether and vinyl methyl ether; and the non-ionic derivatives of ethylenically unsaturated carboxylic acids such as acrylic esters, for example, methyl acrylate, ethyl acrylate, butyl acrylate, hexyl acrylate, 2-ethylhexyl acrylate and lauryl acrylate; methacrylic esters, for example, methyl methacrylate, ethyl methacrylate, butyl methacrylate, hexyl methacrylate, 2-ethylhexyl methacrylate, and lauryl methacrylate; the maleic esters such as dimethyl maleate, diethyl maleate and dibutyl maleate; the fumaric esters, for example, dimethyl fumarate, diethyl fumarate and dibutyl fumarate; and the itaconic esters, for example, dimethyl itaconate, diethyl itaconate and dibutyl itaconate; and the nitriles, for example, acrylonitrile and methacrylonitrile. The preferred hydrophobic monomers are styrene and 2-ethylhexyl acrylate.

Additionally, non-ionic monomers which form water-soluble homopolymers, for example, acrylamide, methacrylamide, hydroxyethyl acrylate and hydroxyethyl methacrylate, may be mixed with a hydrophobic monomer in small amounts up to 10 percent, based on the amount of hydrophobic monomer.

Minor amounts (less than 10 percent by weight) of a graftable reactive functional group which is either in the hydrophobic polymer backbone or pendant therefrom are present. As used herein, the term "graftable" as applied to the reactive group, means that the reactive group does not interfere with vinyl polymerization or react so rapidly in the presence of water that the group is not available for post reaction. The reactive functional group provides a cross-linking or grafting site for the second stage vinyl polymerization.

A wide variety of graftable reactive functional groups may be employed. Groups that undergo free-radical addition or chain transfer reactions may be used. This group includes ethylenic unsaturation both in the backbone or in the pendant groups. Groups that undergo condensation or coupling reactions are preferred. Epoxy groups, carboxy groups, hydroxy groups and sulfhydryl (-SH) groups are of this type. The reactive functional group may be part of the hydrophobic unit as, for example, a copolymerized butadiene unit, or it may be a substituent. The reactive group may be in the hydrophobic polymer, as made, or may be added by a subsequent " post-reaction". The preferred monomer to provide the graftable functional groups is glycidyl methacrylate.

The hydrophilic monomers useful in this invention include a variety of pH independent ionic monomers including positively and negatively charged species (for example, sulfonate, sulfate, quaternary phosphonium groups, quaternary ammonium groups, pyridinium groups, sulfonium groups, isothiouronium groups) to provide the ionic hydrophilic units. These monomers can be present in amount from 0.5 to 1.5 meq/gram of polymer.

The above hydrophilic monomers may be defined as being any ethylenically unsaturated pH independent ionic monomeric unit (that is, repeat unit in the polymer chain) which when in the form of a homopolymer is water-soluble. This includes: the sulfoalkylacrylates and methacrylates such as 3-acrylatopropanesulfonic acid, 2-methacrylatoethanesulfonic acid, 2-methacrylato-propanesulfonic acid, 2-sulfoethyl methacrylate, sodium vinylsulfonate and 2-hydroxy-3-sulfopropyl methacrylate; the acryl- and methacrylamidoalkylsulfonic acids and their salts such as 2-acrylamidopropanesulfonic acid, 2-acrylamidobutanesulfonic acid, 2-acrylamido-2-(4-tolyl)ethanesulfonic acid, 2-acrylamido-2--methylpropanesulfonic acid (AMPS), 2-acrylamido-2-methyl-propanesulfonic acid, 2--methacrylamido-2-phenylethanesulfonic acid, 2-acrylamido-2-phenylpropanesulfonic acid, 3--acrylamido-2,3-dimethylbutanesulfonic acid and 3-acrylamido-2,4,4-trimethylpentanesulfonic acid; the styrene sulfonates such as sodium styrene sulfonate and 4-styrenesulfonic acid; the vinyl sulfonates such as vinylsulfonic acid; the vinyl-substituted quaternary ammonium salts such as N,N,N-trimethyl-N-methacryloxy-ethyl ammonium chloride, N,N,N-trimethyl-N--methacryloxy (2-hydroxypropyl) ammonium chloride, N-(3-sulfopropyl)-N-methacryloxy-ethyl-N,N-dimethyl ammonium betaine; vinylbenzyldialkyl sulfonium salts such as dimethyl vinylbenzylsulfonium chloride. The preferred pH independent ionic monomers contain sulfonate or quaternary ammonium groups.

Water may be added in minor amounts to aid in handling the pH independent monomer(s). The initiator and chain transfer agent levels employed during polymerization reaction can be adjusted to keep the molecular weight low, for example, essentially gel free, so that the copolymer can function as a carrier for water-insoluble organic pesticide materials in a dilutable substantially non-aqueous formulation/composition and also perform as a stabilizer when said formulation/composition is diluted with water.

The initiators used in the polymerization process are of the type which produce free radicals and conveniently are peroxygen compounds, for example: the organic hydroperoxides such as cumene hydroperoxide and t-butyl hydroperoxide; the organic peroxides such as benzoyl peroxide, acetyl peroxide, lauroyl peroxide, t-butyl peroctoate, t-butyl perbenzoate, diisopropyl peroxidicarbonate, peracetic acid and perbenzoic acid, sometimes activated by water-soluble reducing agents such as a ferrous compound, sodium bisulfite, sodium formaldehyde sulfoxylate or hydroxylamine hydrochloride and other free radical producing materials such as VAZO™, azobisalkylnitrile initiators from DuPont. The peresters and azo compounds are preferred initiators. The initiators are present in an amount of from 1.0 to 5.0 weight percent based on the amount of the monomers present.

Most conventional chain transfer agents can be used in the process, with alkyl polyhalides and mercaptans being

preferred. Examples are iodomethane, bromoform, carbon tetrachloride, carbon tetrabromide, bromoethane, alkyl mercaptans of 1 to 12 carbon atoms, thiophenol, hydroxyalkyl mercaptans and carboxyalkyl mercaptans. The chain transfer agents are present in an amount of from 0 to 3.0 weight percent based on the amount of the monomers present.

The reaction medium useful in the process for preparing the copolymers of the present invention include those solvents which are compatible and defined by a solubility parameter range of 16.4-28.7 $(J/m^3)^{½} X 10^{-3}$ (8 to 14 $(cal/cm^3)^{0.5}$). The solubility parameter value for various solvents is listed in H. Burrell, Polymer Handbook, second edition, (J. Brandrup and E.H. Immergut, editors) Wiley Interscience, New York, 1975, IV-337, Tables 1 and 2, pp. 341-348. Representative solvents include, for example, butyrolactone, dioxane, dipropylene glycol methyl ether, methyl ethyl sulfone, methyl laurate, N-dodecyl pyrrolidone, N-methyl pyrrolidone, N-octyl pyrrolidone and tetrahydrofurfural alcohol. The solvents are present in the reaction medium in an amount of from 0 to 500 weight percent based on the amounts of the monomers used.

The non-ionic surfactants useful in the process for preparing the copoiymers of the present invention are those with a hydrophilic-lipophilic baiance (HLB) range of 8 to 20, preferably 8 to 14. The HLB number value for various surfactants is listed by W. C. Griffin, in Kirk-Othmer Encyclopedia of Chemical Technology, 3rd ed. (M Grayson, ed.) Vol. 8, Wiley--Interscience, New York, 1979, pp. 900-930.

Typical non-ionic surfactants useful in the process for preparing the copolymers of the present invention are compounds formed by the reaction of an alkylene oxide, such as ethylene oxide, propylene oxide or butylene oxide with $C_6$-$C_{20}$ long chain fatty alcohols, $C_6$-$C_{20}$ long chain fatty acids, castor oil, $C_8$-$C_{12}$ alkylated phenols, $C_6$-$C_{20}$ long chain alkyl mercaptans, $C_6$-$C_{20}$ long chain alkyl primary amines, for example, cetylamine, the alkylene oxides being reacted in a ratio of such as 5 moles to 20 moles or higher such as up to 50 moles per mole of the co-reactant.

Similarly effective compounds are monoesters such as the reaction products of a polyethylene glycol with a long chain fatty acid, for example, glycerol monostearate, sorbitan trioleate and partial and complete esters of long chain carboxylic acids with polyglycol ethers of polyhydric alcohols. The preferred non-ionic surfactants are ethylene oxide adducts of alkylated phenols.

The non-ionic surfactants are present in an amount of from 50 to 500 weight percent based on the amount of the monomers used.

The term "long chain" as used in the present specification and claims defines an aliphatic group having from 6 to 20 carbon atoms or more.

Another approach to making the amphipathic graft copolymer compositions of the present invention is to prepare a hydrophobic interpolymer containing non-ionic functional units which can be later converted to ionic units.

The hydrophobic interpolymers are more readily prepared because of the compatibility of the components. Monomers and polymers being of similar polarity normally do not require the presence of a compatibilizing component. Illustrative of post reactions which can be carried out on functionally substituted polymers to yield ionic or reactive units are the following: displacement reactions on N, N-di methylaminoethyl methacrylate units to yield quaternary ammonium groups; esterification of acids, acid chlorides or anhydrides to yield sulfoesters such as the reaction of methylacryloyl chloride units with isethionic acid to 2--sulfoethyl methacrylate.

Such post reactions also allow the preparation of copolymerized units which cannot be isolated in the monomeric stage or cannot be prepared in water. These units can be formed as follows:

Step (1) polymerizing, in a second stage vinyl polymerization, a mixture of ethylenically unsaturated non-ionic monomers wherein at least one of the monomers contains a reactive group (other than the polymerizing double bond) which reactive group does not interfere with the vinyl polymerization or react rapidly with the polymerization medium, then

Step (2) adding to the solution from the above step (1), a co-reactant compound in sufficient amount to convert the functional group to a pH independent charge (that is, positive or negative charge).

In Step (2), the substantially non-aqueous solution of Step (1) is converted to a dilutable amphipathic graft copolymer composition.

Any reaction parameters which promote the reaction between an added component, that is, one with a molecular weight of less than 500, and the functional groups on the polymer chain to yield pH independent sites thereon, can be employed. Exemplary of said parameters are increased heat or pressure and changing the polarity of the reaction medium, by addition of a polar solvent. The above parameters promote the reaction between the nucleophile and non-ionic alkylating agents to yield an organic cation as illustrated below:

$$RA + Z \rightarrow RZ+A-$$

where Z is a nucleophile, RA is the alkylating agent and A is a leaving group. RZ + is the derived onium cation and A-

its anion formed from the leaving group. Either reactant can be a substituent on the polymer chain and its counterpart co-reactant is selected so as to yield a cationic amphipathic graft copolymer composition. It is, therefore, possible to make the same cationic product from these two different routes.

Non-ionic monomers which form copolymers with nucleophilic sites include the general classes of tertiary amines, aromatic heterocyclic amines (for example, pyridines), phosphines and sulfides containing at least one polymerizable double bond as a substituent. Examples include vinyl pyridines, vinylbenzyl dialkylamines, dialkylaminoalkyl acrylates and methacrylates and alkylthioalkyl acrylates and methacrylates. The preferred non-ionic monomers with nucleophilic sites are dialkylaminoalkyl methacrylates.

Mixtures of polymers from Step (1) with the desired alkylating agent are allowed to react at from ambient temperature to 100°C, or higher if under pressure, to convert the nucleophilic sites to attached onium ions. As the reaction proceeds, the polymer becomes increasingly hydrophilic and eventually forms the desired amphipathic graft copolymer composition. After the reaction is complete, the reaction product can be recovered and used as is or it can be further purified by conventional treatments to remove unreacted alkylating agents.

The alkylating agents are selected to be highly reactive and volatile and must be at least slightly soluble. Preferred alkylating agents include alkyl bromides and iodides of 1 to 4 carbons, allyl and methallyl chlorides, benzyl chlorides and dimethyl sulfide.

Preferentially, the alkylating site may be placed on the polymer chain by using an active halogen-containing comonomer of the classes: vinyl aralkyl halides, haloalkyl butadienes, bromoalkyl acrylate and methacrylates and vinyl bromide. Preferred are vinylbenzyl chloride, chloromethylbutadiene and the bromoalkyl methacrylate esters. Polymers from (1), containing this alkylating sites in copolymerized form, are reacted with carbon-containing nucleophiles which are stable in, and can diffuse through, aqueous media having a hetero atom as the center of nucleophilicity wherein each covalent bond of said hetero atom is attached to a carbon atom.

The nucleophilic compounds which are used advantageously in the preparation of the dilutable amphipathic graft copolymer composition are represented by the following classes of compounds, sometimes called Lewis bases:

(a) monobasic aromatic nitrogen compounds;
(b) tetra (lower alkyl) thioureas;
(c) $R_1$-S-$R_2$, wherein $R_1$ and $R_2$ individually are lower alkyl, hydroxy lower alkyl or wherein $R_1$ and $R_2$ are combined as one alkylene radical having 2 to 5 carbon atoms;

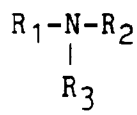

wherein $R_2$ and $R_3$ individually are lower alkyl or hydroxy lower alkyl, or are combined as one alkylene radical having 3 to 5 carbon atoms and $R_1$ is lower alkyl, aralkyl or aryl except when $R_2$ and $R_3$ together are an alkylene radical then $R_1$ is lower alkyl or hydroxy lower alkyl or hydroxy lower alkyl; and

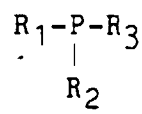

wherein $R_1$, $R_2$ and $R_3$ individually are lower alkyl, hydroxy lower alkyl or aryl.

In the present specification, the term "lower alkyl" is used to define alkyl groups having from 1 to 4 carbon atoms such as methyl, ethyl, propyl, isopropyl, n-butyl and isobutyl.

Representative specific nucleophilic compounds are pyridine, quinoline, isoquinoline, tetramethyl thiourea, tetraethyl thiourea, hydroxyethylmethyl sulfide, hydroxyethylethyl sulfide, dimethyl sulfide, diethyl sulfide, di-n-propyl sulfide, methyl-n-propyl sulfide, methylbutyl sulfide, dibutyl sulfide, dihydroxyethyl sulfide, bis-hydroxybutyl sulfide, trimethylene sulfide, thiacyclohexane, tetrahydro-thiophene, N-methylpiperidine, N--ethylpyrrolidine, N-hydroxyethylpyrrolidine, trimethylphosphine, triethyl-phosphine, tri-n--butylphosphine, triphenylphosphine, tri-methylamine, triethylamine, tri-n-propylamine, tri-iso-butylamine, hydroxyethyldimethylamine, butyldimethylamine, trihydroxyethylamine, and N,N,N-dimethylphenethylamine.

The use of the nucleophilic component as a reactant is the preferred route because the monomer containing alkylating sites are less likely to interfere with vinyl polymerization and the co-reactant nucleophiles are more compatible and blend more readily into the reaction mixture. They are also easier to remove in a post-reactive cleanup and are less toxic than co-reactant alkylating agents.

Another general class of reactions suitable for the present process are the reactions of epoxides with nucleophiles and acids as shown below:

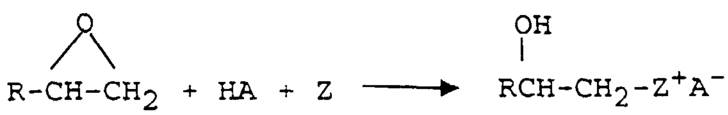

As described earlier, either the epoxide or the nucleophile may be attached to the polymer chain. Epoxide groups may be incorporated into the copolymer by, for example, copolymerization of an unsaturated epoxide such as glycidyl acrylate or methacrylate. Alternatively, the nucleophilic polymers described earlier can be reacted with a lower alkyl epoxide such as ethylene oxide, propylene oxide, epichlorohydrin, glycidyl ethers. Suitable acids for either case include HC1, $H_2SO_4$ and lower carboxylic acids, and are typically selected on the basis of the anion desired.

The low water content non-ionic surfactant/amphipathic graft copolymer solution compositions of this invention are particularly useful as carriers for various water-insoluble organic pesticides in preparing dilutable substantially non-aqueous concentrate formulations/compositions.

The dilutable substantially non-aqueous concentrate formulations/compositions of this invention can be employed to function in pesticidal use formulations/compositions including those which function as acaricides, algicides, antimicrobials, attractants, bactericides, fungicides, mulluscicides, repellants, rodenticides, herbicides and other plant growth controlling materials including insecticides, fungicides, nematicides and parasiticides as well as soil sterilants.

When the dilutable substantially non-aqueous formulations/compositions of the present invention are agricultural pesticides, they can be in the form of conventional emulsifiable concentrates, or emulsifiable concentrates in water soluble film bags which eliminates concerns about container disposal and/or recycle, or they can be in the form of water dispersible dry flowables.

Representative of the water-insoluble organic pesticides which can be employed in the practice of the present invention include one or more pesticides from the classes of acylurea insecticides, organophosphorous insecticides, pyrethroid insecticides, aryloxyaryl herbicides and sulfonamide herbicides. Examples of such pesticides include:

the acylurea insecticides described in U.S. Patent Nos. 4,148,902; 4,173,637 and Reissue 30,563, and especially 1-[3,5-dichloro-4-((5-trifluoromethyl)-3-chloro-2--pyridyloxy)phenyl]-3-(2,6-difluorobenzoyl) urea (common name Chlorfluazuron);
the organophosphorous insecticides and acaricides described in U.S. Patent Nos. 3,244,586; 4,429,125; 4,654,329 and 4,729,987, especially chlorpyrifos and chlorpyrifos-methyl;
the pyrethroid insecticides and miticides such as cypermethrin, permethrin and fenvalerate;
the aryloxyaryl herbicides described in U.S. Patent Nos. 4,550,192; 4,551,170 and 4,750,931, especially 2-(4-(((5-trifluoromethyl)-2-pyridinyl)oxy)phenoxy)propanoic acid; 2-(4--((3-chloro-5-trifluoromethyl)-2-pyridinyl)oxy) phenoxy)propanoic acid methyl ester; 2-(4-((3--chloro-5-trifluoromethyl)-2-pyridinyl)-oxy)phenoxy)propanoic acid ethyl ester; and 2-(4-(((3--fluoro-5-trifluoromethyl)-2-pyridinyl)oxy)phenoxy)-propanoic acid methyl ester;
the sulfonamide herbicides described in U.S. Patent Nos. 4,731,446; 4,740,233; 4,741,764 and 4,755,212, especially N-(2,6-dichlorophenyl)-5,7-dimethoxy-1,2,4--triazolo(1,5a)pyrimidine-2-sulfonamide; N-(2,6-dichloro-3-methylphenyl)-5,7-dimethoxy--1,2,4-triazolo(1,5a)pyrimidine-2-sulfonamide; N-(2,6-dichlorophenyl)-5-methyl-7-methylthio-1,2,4-triazolo-(1,5a)pyrimidine-2-sulfonamide; N-(2-trifluoromethylphenyl)-5-methyl-7--methylthio-1,2,4-triazolo-(1,5a)pyrimidine-2-sulfonamide; N-(2,6-dichloro-3-methylphenyl)-7--methoxy-5-methyl-1,2,4-triazolo(1,5a)-pyrimidine-2-sulfonamide; and N-(2,6-dichloro-3--methylphenyl)-7-ethoxy-5-methyl-1,2,4-triazolo (1,5a)pyrimidine-2-sulfonamide.
the acetanilides and chloroacetanilide herbicides, such as, alachlor;
the dinitroaniline herbicides, such as, trifluralin and ethafluralin;
the thiocarbamates, such as, EPTC and triallate;
the isoxazolidinone herbicides, such as, clomazone;
the pyridinemethanols, such as, fenarimol.

Other representative water-insoluble organic agricultural pesticides which are useful in the practice of this invention include:

amide insecticides, benzonitrile herbicides, benzofuranyl methanesulphonate herbicides, carbamate herbicides, hydroxy cyclohexanone herbicides, imidazolinone herbicides, triazine herbicides, triazinone herbicides, alanine methyl ester fungicides and pyrimidinemethanol fungicides; benzene acetate insecticides, cyclic sulfite insecticide and acaricides, diphenyl chloride insecticides and glycine ester insecticides.

Examples of many other such water-insoluble organic agricultural pesticides are listed in the Pesticide Dictionary, 1992 Farm Chemicals Handbook, Meister Publishing Company.

The substantially non-aqueous formulations/-compositions can comprise blends of surfactants with a hydrophilic-lipophilic balance (HLB) range of 10 to 20, and compatibilizing agents which include organic solvents compatible with the copolymer and defined by a solubility parameter range of 16.4 to 30.8 $(J/m^3)^{1/2}$ X $10^{-3}$ (8 to is $(cal/cm^3)^{0.5)}$. The HLB number value for various surfactants is listed by W. C. Griffin, in Kirk-Othmer Encyclopedia of Chemical Technology, 3rd ed. (M. Grayson, ed.) Vol. 8, Wiley-Interscience, New York, 1979, pp. 900-930. The solubility parameter value for various solvents is listed by H. Burrell, in Polymer Handbook, Second ed. (J. Brandrup, E. H. Immergut, ed.), Wiley Interscience, New York, 1975, IV-337, Tables 1 and 2, pp. 341-348.

A non-ionic surfactant solution of the amphipathic graft copolymer composition can be readily mixed with the water-insoluble organic pesticide material, including an organic solvent, if the organic pesticide is a solid, to form a dilutable substantially non-aqueous formulation/composition that can be easily diluted with water. A stable aqueous emulsion results that is non-settling and is freeze-thaw stable, that is, capable of reconstitution after freeze-thaw cycling. In addition, small oil-in-water emulsion particles, measuring less than 500 nanometers (5000Å) and preferably less than 150 nanometers (1500Å) in size, are formed by simple low shear mixing upon dilution.

Certain of the water-insoluble organic pesticides set forth hereinabove which have high vapor pressures, when employed in formulations/compositions using conventional volatile organic solvents, are subject to high vaporization rates in certain applications due to both the compound's vapor pressure and the volatility of the solvents. These conventional formulations/compositions which employ volatile solvents as the compatibilizing agent thus have limited usefulness in treating situations where conservation tillage, reduced till or no-till practices are employed. In these practices, the pesticide formulation/composition is applied onto the surface of the soil without immediate incorporation into the soil or where the formulation/composition is applied onto the surface of the plants being treated. The above-indicated high vaporization problems can be overcome by modifying the formulation to reduce the amount of high vapor pressure volatile solvents present and also include using low vapor pressure inert plasticizer/oligomer materials which can also act as compatibilizing agents. The modified formulations/compositions contain the water-insoluble organic pesticides in admixture with the low vapor pressure inert plasticizers/oligomers and the amphipathic graft copolymer set forth above and while the modified formulations/compositions are usefulwith conventional soil incorporation practices, they are especially useful in the no-till practices outlined above.

The plasticizers/oligomers useful in preparing the above-modified formulations/compositions have low vapor pressure and have a loss by volatility in polyvinyl chloride of below 20 weight percent as measured by ASTM D 1203-67. Representative plasticizers/oligomers include among others, those taught in the Encyclopedia of Polymer Science and Engineering, Supplement Vol., J. Wiley and Sons, New York, 1988, Table 3, pp. 599-600, and in the 1992 "List Of Pesticide Product Inert Ingredients" set forth by the Office of Prevention, Pesticides and Toxic Substances of the U. S. Environmental Protection Agency, Washington, D.C. Such plasticizers/oligomers include:

abietic acid, 2,6-bis(1-methylheptadecyl)-p-cresol; abietic acid, diethylene glycol ester (CAS No. 10107-99-0); bis(2-ethylhexyl) azelate (CAS No. 103-24-2); bisphenol A/epichlorohydrin condensate (CAS No. 25068-38-6); butyl benzyl phthalate (CAS No. 85-68-7); butyl stearate (CAS No. 123-95-5); butyl naphthalene (CAS No. 31711-50-9); carboxypolymethylene resin (CAS No. 9007-20-9); castor oil (CAS No. 8001-79-4); epoxidized castor oil (CAS No. 105839-17-6); ethoxylated castor oil (CAS No. 61791-12-6); hydrogenated castor oil (CAS No. 8001-78-3); hydrogenated, ethoxylated castor oil (CAS No. 61788-85-0); oxidized castor oil (CAS No. 68187-84-8); cellulose (CAS No. 9004-34-6); cellulose acetate butyrate (CAS No. 9004-32-4); diisobutyl adipate (CAS No. 141-04-8); diisopropyl adipate (CAS No. 6938-94-9); diisononylphthalate (CAS No. 28553-12-0); diisooctyl maleate (CAS No. 1330-76-3); diisodecyl adipate (CAS No. 26761-40-0); dilauryl thiodipropionate (CAS No. 123-28-4); dioctyl maleate (CAS No. 2915-53-9); dioctyl phthalate (CAS No. 117-84-0); diphenyl ether (CAS No. 101-84-8); dipropylene glycol dibenzoate (CAS No. 27138-31-4); epoxidized linseed oil (CAS No. 8016-11-3); epoxidized soybean oil (CAS No. 8013-07-8); 2-ethylhexyl 12-hydroxystearate (CAS No. 29710-25-6); heptyl nonyl adipate; tricresyl phosphate; and wood rosin, an extract of pine stumps, composed of resin acids of the abetic and pimaric types having a phenanthrene nucleus as disclosed in the Encyclopedia of Polymer Science and Engineering, Vol. 14, J. Wiley and Sons, New York, 1988, pp. 438-443.

The invention of the present application is further illustrated by the following examples wherein all parts are by weight.

EXAMPLE I

Preparation of a non-ionic surfactant solution of an anionic amphipathic graft copolymer composition.

Stage 1 - Hydrophobic Solution Polymerization

A mixture of:

115.7 parts Tergitol™ NP-7 (nonylphenol ethoxylate containing 7 moles of ethylene oxide purchased from Union Carbide),
23.3 parts of styrene,
23.3 parts of 2-ethylhexyl acrylate,
3.33 parts of glycidyl methacrylate, and
1.54 parts of VAZO™ 64 (2,2'-Azobis (2-methylpropanenitrile))

was heated to 80°C in a stirred glass reactor and blanketed with an inert atmosphere of nitrogen. A mixture of 0.280 parts of 2-mercaptoethanol in 4.00 parts NP-7 was then added to the reactor in 0.5 part aliquots every 15 minutes after which the reaction was allowed to continue an additional hour at a temperature of 80°C.

Stage 2 - Hydrophilic Monomer Polymerization

145.3 parts of NP-7

was added to the reactor in the Stage 1 product mixture and the following feed solution was continuously and proportionately added over two hours to the stirred reaction mixture at 80°C:
A mixture of

25.0 parts of 2-acrylamido-2-methylpropanesulfonic acid (AMPS) admixed with
20.0 parts of deionized (DI) water,
3.75 parts of dimethylaminoethyl methacrylate,
21.3 parts of methyl methacrylate,
0.14 part of t-butyl hydroperoxide admixed with 6.0 parts of DI water,
0.80 parts of sodium formaldehyde sulfoxylate admixed with 6.0 parts of DI water, and
0.28 part of 2-mercaptoethanol admixed with 6.0 parts of DI water.

The reactor contents were maintained at 80°C for an additional two hours.

The resulting non-ionic surfactant solution of an anionic amphipathic graft copolymer composition containing 10 weight percent water and 65 weight percent non-ionic surfactant, was clear and viscous at room temperature. The viscosity measures-15,000 mPas (15,000 cps) using a Gardner Bubble Viscometer.

EXAMPLE II

Preparation of a non-ionic surfactant solution of a cationic amphipathic graft copolymer composition.

Stage 1 - Hydrophobic Solution Polymerization

A mixture of:

113.4 parts of Tergitol™ NP-7 and
2.63 parts of tert-butyl peroctoate

was heated to 90°C in a stirred glass reactor and blanketed with an inert atmosphere of nitrogen.

A mixture of 41.3 parts of styrene,

41.2 parts of 2-ethylhexyl acrylate,
5.00 parts of glycidyl methacrylate, and
2.63 parts of tert-butyl peroctoate, as a separate feed,

were added continuously and proportionately to the reactor over 1.5 hours.

Stage 2 - Hydrophilic Monomer Polymerization

The following reactants were added continuously and proportionately to the reactor over 1.5 hours:

12.5 parts of dimethylaminoethyl methacrylate,
0.10 parts of 2-mercaptoethanol,
2.25 parts of DI water, and
178.9 parts of Tergitol™ NP-7

the reactor contents were maintained at 90°C for an additional 2 hours. The reaction mixture was cooled to 35°C and 11.3 parts of iodomethane were added over 1 hour while increasing the temperature from 35°C to 40°C, and maintaining the reaction mixture at that temperature for another 3.5 hours.

The resulting non-ionic surfactant/cationic amphipathic graft copolymer solution, with 0.6 weight percent water and 71 weight percent non-ionic surfactant, was clear, amber in color, and very viscous at room temperature. The viscosity measures-100,000 mPas (100,000 cps).

EXAMPLE III

Preparation of a non-ionic surfactant solution of an anionic amphipathic graft copolymer composition.

Stage 1 - Hydrophobic Solution Polymerization

A mixture of:

793.8 parts Tergitol™ NP-7 and 18.4 parts tert-butyl peroctoate were heated to 90°C in a stirred glass reactor and blanketed with an inert atmosphere of nitrogen.

A mixture of

433.1 parts styrene,
144.4 parts 2-ethylhexyl acrylate,
35.0 parts glycidyl methacrylate and
a separate feed of 18.4 parts tert-butyl peroctoate

were added proportionately to the reactor over 1.5 hours. During this addition period the reaction temperature reached a maximum temperature of 99°C.

Stage 2 - Hydrophilic Monomer Polymerization

The following feed solutions were added continuously and proportionately to the reactor over 1.5 hours with reaction temperature decreasing from 99°C to 92°C:

87.5 parts 2-acrylamido-2-methylpropane sulfonic acid (AMPS) admixed with 87.5 parts DI water,
41.0 parts dibutyl amine,
1176.7 parts Tergitol™ NP-7,
0.7 parts 2-mercaptoethanol admixed with 15.8 parts DI water

and the reactor contents maintained for an additional 2 hours at 90°C.

The polymer/non-ionic/water reaction mixture was transferred to a steam still and the residual monomers removed with the aid of a vacuum.

EXAMPLE IV

Preparation of a non-ionic surfactant solution of an anionic amphipathic graft copolymer composition.

Stage 1 - Hydrophobic Solution Polymerization

A mixture of:

113.4 parts Neodol™ (from the Shell Chemical Co.) 23-6.5 (linear primary alcohols in the $C_{12}$ to $C_{13}$ carbon number range with an average of 6.5 moles of ethylene oxide) and
2.63 parts tert-butyl peroctoate

was heated to 90°C in a stirred glass reactor and blanketed with an inert atmosphere of nitrogen.

A mixture of

27.5 parts styrene,
55.0 parts 2-ethylhexyl acrylate,
5.00 parts glycidyl methacrylate, and
2.63 parts tert-butyl peroctoate (by a separate feed line), were then added proportionately to the reactor over 1.5 hours.

Stage 2 - Hydrophilic Monomer Polymerization

After a period of 1/2 hour, a monomer solution consisting of:

12.5 parts 2-acrylamido-2-methylpropane sulfonic acid (AMPS) admixed with 12.5 parts DI water, and
5.85 parts dibutyl amine

was added to the reactor continuously over 1.5 hours.

A solution of

0.10 part 2-mercaptoethanol,
2.25 DI water, and
168.1 parts Neodol™ 23-6.5

was then added continuously and proportionately over the last hour of the addition and the reactor contents were maintained for an additional 2 hours at 90°C.

EXAMPLE V

Preparation of a non-ionic surfactant solution of an amphipathic graft copolymer composition.

Stage 1 - Hydrophobic Solution Polymerization

A mixture of:

272.0 parts Neodol™ (from the Shell Chemical Co.)
45-7 (linear primary alcohols in the $C_{14}$ to $C_{15}$ carbon number range with an average of 7 moles of ethylene oxide), and
3.00 parts VAZO™ 64 (2.2'-Azobis(2-methylpropanenitrile))

was heated to 80°C in a stirred glass reactor and blanketed with an inert atmosphere of nitrogen.

A mixture of

35.0 parts styrene,
35.0 parts 2-ethylhexyl acrylate, and
5.00 parts glycidyl methacrylate

was added continuously over 1.5 hours to the stirred reaction mixture.

Stage 2 - Hydrophilic Monomer Polymerization

The following feed solutions were continuously and proportionately added over 1.5 hours to the stirred reaction mixture at 80°C:
To the reaction mixture was then added

25.0 parts 2-acrylamido-2-methylpropane sulfonic acid (AMPS),
25.0 parts DI water,
0.10 part 2-mercaptoethanol plus 4.5 parts DI water,

and the reactor contents were maintained at 80°C for an additional two hours.

EXAMPLE VI

Preparation of amphipathic copolymer composition using a simultaneous single stage monomer addition. A mixture of:

118.2 parts Tergitol™ NP-7, and
2.63 parts tert-butyl peroctoate

was heated to 70°C and the temperature then raised from 70°C to 90°C over the next 40 minutes. Monomer feed solutions were started when reactor temperature reaches 88°C and proportionately added over 120 minutes. The hydrophobic monomer mixture contains

63.5 parts styrene, 21.2 parts 2-ethylhexyl acrylate, and 3.33 parts glycidyl methacrylate.

The hydrophilic monomer mixture contains

12.0 parts 2-acrylamido-2-methyl-propanesulfonic acid, 12.0 parts DI water, and 5.61 parts di-n-butyl amine as the neutralent.

After 90 minutes into the monomer addition, the following feed was added to the reaction mixture:

0.10 part 2-mercaptoethanol and
2.25 parts DI water.

After the monomer addition was complete, 159.3 parts Tergitol™ NP-7 were added over 60 minutes at 90°C and the contents maintained at this condition for another 120 minutes. The residual volatiles were removed by steam and vacuum distillation and the water content measures 3 percent.

Numerous water-insoluble organic pesticides were easily formulated with solutions of non-ionic surfactants and the amphipathic graft copolymers of the present invention to form dilutable substantially non-aqueous emulsifiable concentrate compositions. These concentrates were formulated so as to provide the normal conventional content of the active pesticides in the diluted formulation/composition for field use.

In general, the concentration of the active pesticides in the concentrate composition was from 5.0 to 95 percent by weight. In the final diluted formulation/composition, the concentration of the active pesticides can be from 0.001 to 50 percent by weight.

Agricultural emulsifiable concentrates were especially useful where the active ingredient (A.I.), if a low melting solid (m.p.< = 100°C), is premixed with a low vapor pressure inert plasticizer/oligomer or an organic solvent to form a fluid phase at or below ambient temperatures. This liquid phase was then mixed with the amphipathic graft copolymer composition, non-ionic surfactant, and minimal water to form a dilutable substantially non-aqueous formulation/composition that was freeze-thaw stable. When the formulation was diluted with water, an aqueous formulation/composition of oil-in-water small emulsion particles readily forms with minimal mixing.

Preferred dilutable substantially non-aqueous agricultural formulations/compositions contain the following components: (1) amphipathic graft copolymer, (2) water-insoluble organic pesticide, (3) low vapor pressure inert plasticizer/oligomer materials and/or a water-insoluble organic solvent and/or crystal growth preventor for the pesticide to maintain a liquid state and to allow the formulation/composition to reconstitute after freeze-thaw cycles, (4) a non-ionic surfactant, (5) additives such as neutralents, color and odor-masking agents, hydrotopes, electropes, freeze-thaw agents and anti-foam agents and (6) less than 10 percent by weight of water.

The ratio of oil, which includes pesticide plus solvent, to non-ionic surfactant ranges from 1.5:1 to 3:1 for minimum particle size of the diluted substantially non-aqueous formulation/composition diluted to a 2 percent active in water dilution.

The preferred minimum particle size of the diluted oil-in-water emulsion occurs when the amphipathic graft copolymer was present in the concentrate composition in the range of from 7 to 10 weight percent. The range of the charge density, expressed as milliequivalents of ionizable charge per gram polymer, was surprisingly broad and is from 0.5

meq/g to 1.5 meq/g.

The water level was generally-less than 10 weight percent for the dilutable non-aqueous concentrate formulation/ composition.

EXAMPLE VII

Freeze-thaw test:

The freeze-thaw cycling test was conducted by cooling 20 grams of a sample of the formulation/composition to be tested at -10°C to -15°C until it solidifies, which usually takes 2 hours. The sample was then allowed to thaw and equilibrate at room temperature overnight, without agitation or additional heat. Observed crystal residue, phase separation, or both, result in a test failure. The procedure was repeated two or three times and if the formulation/composition reconstitutes under these conditions, it was rated as passing.

EXAMPLE VIII

Thermal fluctuation test:

The thermal fluctuation test was conducted by heating 20 grams of a sample of the non-aqueous concentrate to be tested at 50°C. The concentrate was observed for changes with time, such as, color, clarity, gel formation and phase separation. Aliquots were removed weekly and allowed to cool to room temperature. The aliquot was diluted to a 2 weight percent active in water before observing dilution characteristics, such as ease of dilution, particle size and the rate of settling. The test was performed over a maximum 3 month period with noted changes upon storage and dilution of the test concentrate.

In order for the hydrophobic/hydrophilic copolymer to function as a stabilizer for pesticide formulations/compositions when diluted, the copolymer should be gel free. This was accomplished by adjusting the initiator and chain transfer agent levels in both hydrophobic and hydrophilic polymerizations. This technique allows for preparation of dilutable substantially non-aqueous concentrate formulations/ compositions without removal of water and features high concentrations of the active pesticide. Diluted formulations of these concentrates with water form stable oil-in-water emulsions having particle sizes of less than 500 nanometers (5000Å). The resulting dilutable substantially non-aqueous formulations/compositions with the amphipathic graft copolymers of the present invention were more stable to stress (freeze/ thaw and thermal fluctuations during storage) than formulations/compositions made employing conventional or known polymeric surfactants and conventional or structured particle latexes as the carriers or stabilizers.

The preferred formulations/compositions of the present invention contain the anionic amphipathic graft copolymer stabilizers in non-ionic surfactant solutions selected to optimize stability of the concentrate and its dilution in water while minimizing emulsion particle size. Preferred amphipathic graft copolymer stabilizers were obtained by using a combination of non-ionic hydrophobic vinyl monomers and a graftable vinyl monomer and a pH independent anionic vinyl monomer. The non-ionic hydrophobic monomers were selected on the basis of aliphatic and aromatic balance required by the non-ionic surfactant and the oil phase which was a solution of the water-insoluble organic pesticide material plus low vapor pressure inert plasticizer/oligomer or mixtures with an organic solvent and/or crystal growth preventor. The preferred monomers are styrene for aromaticity and 2-ethylhexyl acrylate for aliphatic character. The preferred graftable monomer was glycidyl methacrylate. The preferred pH independent anionic monomer was 2-acrylamido-2-methylpropanesulfonic acid ((AMPS)™ from Lubrizol).

The preferred non-ionic surfactants were ethoxylate adducts of alkylphenols or alcohols having a hydrophile-lipophile balance value (HLB) in the range of 10 to 13 and the most preferred range of 11.5 to 12.5 for minimum particle size of the dilute oil-in-water pesticide emulsion. Preferred non-ionic surfactants for minimum particle size and stability were ethoxylated nonylphenols where the average number of moles of ethylene oxide ranges from 5 to 9. These polymer and non-ionic choices are dependent on the specific characteristics of the oil phase. The non-ionic surfactants were present in the concentrate formulation/composition in an amount of from 10.0 to 50.0 weight percent of the total formulation.

Water-insoluble organic solvents and/or plasticizers of low volatility were also useful in preparing the dilutable substantially non-aqueous formulations/compositions. They were used to form liquid solutions with the pesticides to form an oil phase that remains noncrystalline for optimum low temperature stability and reconstitution of formulations/ compositions after freeze-thaw cycling.

It was desirable for the solvent/plasticizer to be water-insoluble and compatible with the pesticide, the hydrophobic component of the amphipathic graft copolymer, and the hydrophobic component of the non-ionic surfactant. This gives desirable small particle size oil-in-water dilutions with excellent stability and movement in the soil, especially if the copolymer was anionic.

Solvents/crystal growth preventors or plasticizers of choice include one or more of methyl esters of fatty acids such as caproic, lauric, myristic, oleic and tall oil; glycerides such as the oils of cottonseed, soybean, castor bean, and corn; triacetin; tributyl citrate; polyglycols; N-alkylated pyrrolidones such as the methyl, octyl and dodecyl alkyl derivatives; and terpenes such as d-limonene. Preferred solvents/crystal growth preventors or plasticizers were one or more of the methyl esters of lauric, myristic, oleic acids and the N-alkylated pyrrolidones with methyl and octyl being the preferred alkyl groups. The solvents/crystal growth preventors or plasticizers were present in an amount of from 0 to 300 weight percent based on the water-insoluble organic pesticide.

Formulations/compositions providing for improved controlled leaching, release, and volatility can be designed using variables of hydrophobic/hydrophilic, aromatic/aliphatic character of the hydrophobic polymer portion and charge type/ level of the hydrophilic polymer portion in the amphipathic graft copolymer compositions of this invention in the presence of additives comprising plasticizers/oligomers, water-insoluble solvents, neutralents, color and odor-masking agents, hydrotopes, electropes, freeze-thaw agents anti-foam agents and monomeric ionic surfactants.

EXAMPLE IX

Preparation of a dilutable substantially non-aqueous concentrate formulations/compositions

Separate dilutable concentrate formulations/compositions were shown in Table I. These were prepared by employing one or more of the following pesticides(1): alachlor, chlorpyrifos, chlorpyrifos-methyl, triallate, and trifluralin in admixture with one of the amphipathic graft copolymer compositions(3) of Example III or Example VI.

TABLE I

| Dilutable Substantially Non-aqueous Concentrate Formulations | |
|---|---|
| Concentrate Formulation/composition Components | Weight percent |
| Water-insoluble organic pesticide (1) | 40.0 |
| Solvent: Methyl Laurate | 26.0 |
| Non-ionic Surfactant: Tergitol NP-7- (2) | 22.0 |
| Amphipathic graft copolymer composition(3) | 8.0 |
| Water | 4.0 |
| total | 100.0 |

(1) see above.
(2) Tergitol NP-7 (Reg. TM) (nonylphenol with an average of 7 moles of ethylene oxide from Union Carbide).
(3) see above.

EXAMPLE X

Preparation of a diluted formulation.

A dilutable substantially non-aqueous formulation/composition was diluted with water to reduce the water-insoluble material content for proper activity and ease of application as shown below in Table II.

TABLE II

| Diluted Formulation/composition from Concentrate | |
|---|---|
| Formulation Components | Weight percent |
| 40 percent Chlorpyrifos Concentrate Formulation/composition prepared as in Example IX | 5.0 |
| Water | 95.0 |
| total | 100.0 |

This diluted formulation/composition has small oil-in-water particle sizes of 90 nanometers (900Å) when diluted with water, using chlorpyrifos as an insecticide at (40.0 percent by weight), methyl laurate (26 percent by weight), Tergitol™ NP-7 (22 percent by weight), amphipathic ionic copolymeric carrier (8 percent by weight) and water (4 percent by weight).

EXAMPLE XI

Another aqueous diluted formulation/composition was prepared by simply mixing the following: fenarimol fungicide (30.0 percent by weight), methyl pyrrolidone (30.0 percent by weight), Tergitol™ NP-7 non-ionic surfactant (31.1 percent by weight), amphipathic graft copolymer (Example VI) (8.0 percent by weight), and water (0.9 percent by weight). The particle size upon dilution with water measures 114 nanometers (1140Å).

EXAMPLE XII

One example of a useful anionic dilutable substantially non-aqueous formulation/composition was prepared by simply mixing a solution of a low melting agricultural pesticide, for example, chlorpyrifos and methyl laurate, with the non-ionic surfactant/amphipathic anionic copolymer/water solution in the following weight ratio: 42/26/21/8/3. This formulation/composition has excellent reconstitution after freeze-thaw cycling.

EXAMPLE XIII

A useful cationic dilutable substantially non-aqueous formulation/composition was prepared by simple mixing. The formulation/composition comprises 42 parts of chlorpyrifos, 25 parts of methyl laurate and 33 parts of a solution of Tergitol™ NP-7/amphipathic cationic copolymer/water in the following weight ratio: 42/25/23.5/9.3/0.2. An aqueous dilution of this formulation forms a diluted formulation/composition with oil-in-water emulsion particles that are substantive to negatively charged substrates.

EXAMPLE XIV

A dilutable substantially non-aqueous concentrate formulation/composition was prepared by simply mixing the low water content amphipathic graft copolymer/non-ionic surfactant mixture with chlorpyrifos plus the methyl ester of lauric acid as a solvent. The formulation/composition contained 42 percent chlorpyrifos, 25 percent methyl laurate and 33 percent of a solution of Tergitol™ NP-7, amphipathic graft copolymer and water in the following weight ratio: 42/25/21.7/8.6/2.7. The density of this clear solution measures 1.13 g/mL. This oil-based formulation/composition was placed in a bag or container composed of partially hydrolyzed polyvinyl acetate. When the bag was added to water in a tank, the bag dissolves and the concentrate formulation/composition contained therein mixes easily in the water to form a ready-to-use stableoil-in-water emulsion. The incorporation of the bag into the water has little effect on the resulting emulsion particle size. Table III which follows, compares the emulsion particle size in the diluted formulation as a function of the level of polymer in the film wall of the bag.

TABLE III

| PARTICLE SIZE OF DILUTED FORMULATION/composition FROM A CONTAINERIZED DILUTABLE SUBSTANTIALLY NON-AQUEOUS EMULSIFIABLE CONCENTRATE | |
|---|---|
| Parts by weight of 2 mil film(1) per 100 parts of diluted formulation/composition | Emulsion particle size in Angstroms(2) |
| 0 | 1100 |
| 0.85 | 1100 |
| 1.7 | 1140 |
| 2.5 | 1140 |

(1) Packaging ratio of surface to volume = 1.45.

(2) Dilution of oil based 42 weight percent chlorpyrifos formulation contained with and without film bags to 2 weight percent chlorpyrifos in water. Emulsion particle size measured by Brice Phoenix Light Scattering Unit.

EXAMPLE XV

Preparation of a non-ionic surfactant solution of an anionic amphipathic graft copolymer. By following the above set forth preparative procedures, a copolymer containing 25 weight percent 2-acrylamido-2-methylpropanesulfonic acid (AMPS), 37,5 weight percent n-butyl methacrylate and 37.5 weight percent 2-ethylhexyl acrylate prepared by reacting the above ingredients and tert-butyl peroctoate in Tergitol™ NP-7.

EXAMPLE XVI

Preparation of a dilutable substantially non-aqueous concentrate low volatilization formulations/composition as set forth in TABLE IV.

TABLE IV

| Dilutable Substantially Non-aqueous Concentrate Formulations/compositions | |
|---|---|
| Concentrate Formulation Components | Weight percent |
| Organic pesticide: Trifluralin | 33.0 |
| Plasticizer: Butyl benzyl phthalate | 33.0 |
| Non-ionic Surfactant: Tergitol NP-7(1) | 24.8 |
| Amphipathic graft copolymer composition(2) | 9.2 |
| total | 100.0 |

(1) Tergitol NP-7 (Reg. TM) (nonylphenol with an average of 7 moles of ethylene oxide from Union Carbide).

(2) Amphipathic graft copolymer compositions of Example XV.

EXAMPLE XVII

Preparation of a non-ionic surfactant solution of an anionic amphipathic graft copolymer. By following the above set forth preparative procedures, a copolymer containing 37.3 weight percent styrene, 37.3 weight percent n-butyl methacrylate, 2.7 weight percent glycidyl methacrylate and 22.6 weight percent 2-acrylamido-2-methylpropanesulfonic acid (AMPS) prepared by reacting the above ingredients and tert-butyl peroctoate in Tergitol™ NP-7.

EXAMPLE XVIII

Preparation of a dilutable substantially non-aqueous concentrate low volatilization formulations/compositions as set forth in TABLE V.

TABLE V

| Dilutable Substantially Non-aqueous Concentrate Formulations | |
|---|---|
| Concentrate Formulation Components | Weight percent |
| Organic pesticide: Trifluralin | 33.0 |
| Plasticizer: Butyl benzyl phthalate | 16.5 |
| Oligomer: wood rosin(1) | 16.5 |
| Non-ionic Surfactant: Tergitol NP-7(2) | 24.8 |
| Amphipathic graft copolymer composition(3) | 9.2 |
| total | 100.0 |

(1) wood rosin (a proprietary product of Sovereign Chemical Co., which is an extract of pine stumps composed of resin acids of the abetic and pimaric types having a phenanthrene nucleus.

(2) Tergitol NP-7 (Reg. TM) (nonylphenol with an average of 7 moles of ethylene oxide from Union Carbide).

(3) Amphipathic graft copolymer compositions of Example XVII.

EXAMPLE XIX

Pesticide Activity

The organic pesticides employed in the stable aqueous emulsion formulations/compositions of the water-insoluble organic pesticide/surfactant-amphipathic graft copolymer mixtures of the present invention have all been found to maintain their basic biological activity in the formulations of the instant invention as compared to the basic biological activity of the pesticides when the pesticide was used in conventional formulations/compositions.

EXAMPLE XX

Representative formulations/compositions of the present invention were evaluated to determine their effectiveness in preemergent operations.

Water dispersions were prepared by mixing the following materials with water.

| Concentrate Formulation | |
|---|---|
| Formulation Components | Weight percent |
| Trifluralin | 35.00 |
| Amphipathic graft copolymer reaction product mixture of Example III | 8.80[(a)] |
| Tergitol™ NP-7 | 24.04 |
| Methyl Laurate | 31.00 |
| Dibutyl amine | 0.16 |
| Water | 1.00 |
| Total | 100.00 |

(a)= amount is the weight of copolymer only

Seed beds of a loamy sand field soil of good nutrient content were prepared in 30.48 x 60.96 cm (1.0 x 2.0 foot) plastic trays 5.08-7.62 cm (2-3 inches) deep. The soil was seeded with seeds of giant foxtail (Setaria faberi) at a planting rate of 100 seeds per bed. The seeds were covered with soil to a depth of 0.64 to 1.27 cm (¼ to ½ inch). The beds were watered with a predetermined amount of water followed by the application, by a moving spray, of a 0.24 percent emulsion of a diluted formulation/composition prepared by diluting the above concentrate formulation/composition with a predetermined amount of water. Other beds were left untreated to serve as controls. After treatment, the beds were maintained for 21 days under greenhouse conditions for good plant growth. At the end of this period, the beds were examined to determine the amount of kill and control of giant foxtail. It was determined that 78 percent preemergent control was obtained.

Various modifications may be made in the present invention without departing from the spirit or scope thereof as will be apparent to those skilled in the art.

## Claims

1. A process for preparing amphipathic graft copolymers having a charge density of from 0.5 to 1.5 meq/gram polymer and a molecular weight of between 5,000 and 250,000, which comprises adding at least two ethylenically unsaturated hydrophobic monomers from the group consisting of alkyl acrylates, alkyl methacrylates and styrene compounds and at least one ethylenically unsaturated hydrophilic monomer from the group consisting of the sulfoalkylacrylates, the sulfoalkylmethacrylates, the acrylamidoalkylsulfonic acids, the methacrylamidoalkylsulfonic acids, the styrene sulfonates and the salts of said groups, vinyl substituted quaternary ammonium salts and vinylbenzyldialkyl sulfonium salts to a reaction medium, wherein at least one of the hydrophobic monomers is a graftable monomer and the hydrophilic monomers include at least one anionic and/or cationic pH independent functionality, or a post reactive non-ionic monomer that can be converted to a pH independent ionic derivative, said hydrophobic monomers are present in an weight ratio of from 1:1 to 10:1 of the hydrophobic monomers to the hydrophilic monomer, and free-radical polymerizing said monomers and recovering the thus prepared amphipathic graft copolymer in a solution containing less than 15 percent by weight water.

2. A process as defined in Claim 1 wherein said monomers are added simultaneously.

3. A process as defined in Claim 1 which comprises in a first stage, free-radical polymerizing a solution comprising said ethylenically unsaturated hydrophobic monomers, and then adding to said first stage polymerization product mixture, said ethylenically unsaturated hydrophilic monomer or momomers, and polymerizing in a second stage said mixture .

4. A process as defined in any one of Claims 1, 2 or 3 wherein the reaction medium contains a non-ionic surfactant having an HLB value of from 8 to 20.

**5.** A process as defined in Claim 1, 2, 3 or 4 wherein the reaction medium contains a solvent having a solubility parameter in the range of from 16.4-28.7 $(J/m^3)^{1/2} \times 10^{-3}$ (8 to 14 $(cal/cm^3)^{0.5}$).

**6.** A dilutable substantially non-aqueous agricultural pesticide concentrate formulation containing less than 15 percent water which is non-settling and freeze-thaw stable which comprises an amphipathic graft copolymer having a charge density of from 0.5 to 1.5 meq/gram polymer and a molecular weight of between 5,000 and 250,000, comprising a hydrophobic backbone copolymer prepared from at least two ethylenically unsaturated hydrophobic monomers from the group consisting of alkyl acrylates, alkyl methacrylates and styrene compounds, said hydrophobic backbone polymer containing grafting sites to which is grafted at least one ethylenically unsaturated hydrophilic monomer from the group consisting of the sulfoalkylacrylates, the sulfoalkylmethacrylates, the acrylamidoalkylsulfonic acids, the methacrylamidoalkylsulfonic acids, the styrene sulfonates and the salts of said groups, vinyl substituted quaternary ammonium salts and vinylbenzyldialkyl sulfonium salts containing stabilizing pH independent ionic groups, said hydrophobic monomers are present in an weight ratio of from 1:1 to 10:1 of the hydrophobic monomers to the hydrophilic monomer, a water-insoluble organic agricultural pesticide, a compatibilizing agent for the pesticide and a non-ionic surfactant, said formulation when diluted in water forms an oil-in-water emulsion wherein the particle sizes of said emulsion are less than 500 nanometers (5000Å).

**7.** A formulation as defined in Claim 6 wherein the water-insoluble organic agricultural pesticide is a member of the group consisting of alachlor, chlorpyrifos, chlorpyrifos-methyl, fenarimol, triallate, and trifluralin.

**8.** A formulation as defined in Claim 6 or 7 comprising up to 65 weight percent pesticide and less than 6 weight percent water.

**9.** A formulation as defined in Claim 6, 7 or 8 which also contains at least one formulation additive of the group consisting of neutralents, color and odor-masking agents, freeze-thaw agents and antifoam agents.

**10.** A water-diluted agricultural pesticide formulation which comprises a mixture of an amphipathic graft copolymer having a charge density of from 0.5 to 1.5 meq/gram polymer and a molecular weight of between 5,000 and 250,000, comprising a hydrophobic backbone copolymer prepared from at least two ethylenically unsaturated hydrophobic monomers from the group consisting of alkyl acrylates, alkyl methacrylates and styrene compounds, said polymer containing grafting sites to which is grafted at least one ethylenically unsaturated hydrophilic monomer from the group consisting of the sulfoalkylacrylates, the sulfoalkylmethacrylates, the acrylamidoalkylsulfonic acids, the methacrylamidoalkylsulfonic acids, the styrene sulfonates and the salts of said groups, vinyl substituted quaternary ammonium salts and vinylbenzyldialkyl sulfonium salts containing stabilizing pH independent ionic groups, said hydrophobic monomers are present in an weight ratio of from 1:1 to 10:1 of the hydrophobic monomers to the hydrophilic monomer, a water-insoluble organic agricultural pesticide, a compatibilizing agent for the pesticide, a non-ionic surfactant and water, said water diluted formulation being non-settling and freeze-thaw stable and wherein the particle sizes of the thus formed oil-in-water emulsion are less than 500 nanometers (5000Å).

**11.** A water-diluted formulation as defined in Claim 10 wherein the water-insoluble organic agricultural pesticide is a member of the group consisting of alachlor, chlorpyrifos, chlorpyrifos-methyl, fenarimol, triallate, and trifluralin.

**12.** A water-diluted formulation as defined in Claim 10 or 11 which also contains at least one formulation additive of the group consisting of neutralents, color and odor-masking agents, freeze-thaw agents and antifoam agents.

**13.** A method for the control of the growth of agricultural pests in foliar and soil environments which comprises contacting said pests and their foliar and soil environments with a pesticidally effective amount of an aqueous formulation which comprises a mixture of water and a water-insoluble organic pesticide with a compatibilizing agent for the pesticide, an amphipathic graft copolymer having a charge density of from 0.5 to 1.5 meq/gram polymer and a molecular weight of between 5,000 and 250,000, comprising a hydrophobic backbone copolymer prepared from at least two ethylenically unsaturated hydrophobic monomers from the group consisting of alkyl acrylates, alkyl methacrylates and styrene compounds, said polymer containing grafting sites to which is grafted at least one ethylenically unsaturated hydrophilic monomer from the group consisting of the sulfoalkylacrylates, the sulfoalkylmethacrylates, the acrylamidoalkylsulfonic acids, the methacrylamidoalkylsulfonic acids, the styrene sulfonates and the salts of said groups, vinyl substituted quaternary ammonium salts and vinylbenzyldialkyl sulfonium salts containing stabilizing pH independent ionic groups, said hydrophobic monomers are present in an weight ratio of from 1:1 to 10:1 of the hydrophobic monomers to the hydrophilic monomer and a non-ionic surfactant.

**14.** A method as defined in Claim 13 wherein the water-insoluble organic pesticide is a member of the group consisting of alachlor, chlorpyrifos, chlorpyrifos-methyl, fenarimol, triallate, and trifluralin.

**15.** A method of packaging substantially non-aqueous formulations for safe and convenient handling which comprises confining within a bag composed of at least partially water-soluble material, a pesticidal concentrate formulation as defined in Claim 6.

**Patentansprüche**

**1.** Verfahren zur Herstellung amphipathischer Pfropfcopolymere mit einer Ladungsdichte von 0,5 bis 1,5 mÄq/Gramm Polymer und einem Molekulargewicht von zwischen 5.000 und 250.000, umfassend das Zugeben von mindestens zwei ethylenisch ungesättigten hydrophoben Monomeren aus der Gruppe, bestehend aus Alkylacrylaten, Alkylmethacrylaten und Styrolverbindungen, und mindestens einem ethylenisch ungesättigten hydrophilen Monomer aus der Gruppe, bestehend aus den Sulfoalkylacrylaten, den Sulfoalkylmethacrylaten, den Acrylamidoalkylsulfonsäuren, den Methacrylamidoalkylsulfonsäuren, den Styrolsulfonaten und den Salzen dieser Gruppen, vinylsubstituierten quarternären Ammoniumsalzen und Vinylbenzyldialkylsulfoniumsalzen, zu einem Reaktionsmedium, worin mindestens eines der hydrophoben Monomere ein pfropfbares Monomer ist und die hydrophilen Monomere mindestens eine anionische und/oder kationische pH-unabhängige Funktionalität oder ein nachreaktives nichtionisches Monomer, das in ein pH-unabhängiges ionisches Derivat umgewandelt werden kann, umfassen, worin die hydrophoben Monomere in einem Gewichtsverhältnis von 1:1 bis 10:1 bezüglich, der hydrophoben Monomere zu dem hydrophilen Monomer vorliegen, und radikalisches Polymerisieren der Monomere und Gewinnen des so hergestellten amphipathischen Pfropfcoplymers in einer Lösung, die weniger als 15 Gewichtsprozent Wasser enthält.

**2.** Verfahren nach Anspruch 1, worin die Monomere gleichzeitig zugegeben werden.

**3.** Verfahren nach Anspruch 1, umfassend in einer ersten Stufe, das radikalische Polymerisieren einer Lösung, umfassend die ethylenisch ungesättigten hydrophoben Monomere und dann Zugeben des (der) ethylenisch ungesättigten hydrophilen Monomers (Monomere) zu dem Polymerisationsproduktgemisch aus der ersten Stufe und Polymerisieren des Gemisches in einer zweiten Stufe.

**4.** Verfahren nach einem der Ansprüche 1, 2 oder 3, worin das Reaktionsmedium ein nichtionisches oberflächenaktives Mittel mit einem HLB-Wert von 8 bis 20 enthält.

**5.** Verfahren nach Anspruch 1, 2, 3 oder 4, worin das Reaktionsmedium ein Lösungsmittel mit einem Löslichkeitsparameter im Bereich von 16,4 - 28,7 $(J/m^3)^{1/2} x 10^{-3}$ (8 bis 14 $(cal/cm^3)^{0,5}$) enthält.

**6.** Verdünnbare, im wesentlichen nicht wässrige Landwirtschaftspestizidkonzentratformulierung, die weniger als 15 Prozent Wasser enthält, die kein Absitzen zeigt und gefrier-tau-stabil ist, umfassend ein amphipathisches Pfropfcopolymer mit einer Ladungsdichte von 0,5 bis 1,5 mÄq/Gramm Polymer und einem Molekulargewicht von 5.000 bis 250.000, umfassend ein hydrophobes Copolymergrundgerüst, das hergestellt ist aus mindestens zwei ethylenisch ungesättigten hydrophoben Monomeren aus der Gruppe, bestehend aus Alkylacrylaten, Alkylmethacrylaten und Styrolverbindungen, wobei das hydrophobe Polymergrundgerüst Pfropfstellen aufweist, an welche mindestens ein ethylenisch ungesättigtes hydrophiles Monomer aus der Gruppe, bestehend aus den Sulfoalkylacrylaten, den Sulfoalkylmethacrylaten, den Acrylamidoalkylsulfonsäuren, den Methacrylamidoalkylsulfonsäuren, den Styrolsulfonaten und den Salzen dieser Gruppen, vinylsubstituierten quarternären Ammoniumsalzen und Vinylbenzyldialkylsulfoniumsalzen, die stabilisierende pH-unabhängige ionische Gruppen enthalten, gepfropft ist, wobei die hydrophoben Monomere in einem Gewichtsverhältnis von 1:1 bis 10:1 bezüglich der hydrophoben Monomere zu dem hydrophilen Monomer vorliegen, ein wasserunlösiches organisches Landwirtschaftspestizid, ein Kompatibilisierungsmittel für das Pestizid und ein nichtionisches oberflächenaktives Mittel, wobei die Formulierung beim Verdünnen in Wasser eine Öl-in-Wasser-Emulsion bildet, worin die Teilchengrößen der Emulsion weniger als 500 Nanometer (5.000 Å) sind.

**7.** Formulierung nach Anspruch 6, worin das wasserunlösliche Landwirtschaftspestizid ein Mitglied der Gruppe, bestehend aus Alachlor, Chlorpyrifos, Chlorpyrifos-Methyl, Fenarimol, Triallat und Trifluralin, ist.

**8.** Formulierung nach Anspruch 6 oder 7, umfassend bis zu 65 Gewichtsprozent Pestizid und weniger als 6 Gewichtsprozent Wasser.

9. Formulierung nach Anspruch 6, 7 oder 8, welche auch mindestens ein Formulierungsadditiv der Gruppe, bestehend aus Neutralisierungsmitteln, Färbe- und Geruchsmaskierungsmitteln, Gefrier-Tau-Mitteln und Antischaummitteln, umfaßt.

10. Wasserverdünnte Landwirtschaftspestizidformulierung, umfassend ein Gemisch von einem amphipathischen Pfropfcopolymer mit einer Ladungsdichte von 0,5 bis 1,5 mÄq/Gramm Polymer und einem Molekulargewicht von zwischen 5.000 und 250.000, umfassend ein hydrophobes Copolymergrundgerüst, das hergestellt ist aus mindestens zwei ethylenisch ungesättigten hydrophoben Monomeren aus der Gruppe, bestehend aus Alkylacrylaten, Alkylmethacrylaten und Styrolverbindungen, wobei das Polymer Pfropfstellen aufweist, an welche mindestens ein ethylenisch ungesättigtes hydrophiles Monomer aus der Gruppe, bestehend aus den Sulfoalkylacrylaten, den Sulfoalkylmethacrylaten, den Acrylamidoalkylsulfonsäuren, den Methacrylamidoalkylsulfonsäuren, den Styrolsulfonaten und den Salzen dieser Gruppen, vinylsubstituierten quarternären Ammoniumsalzen und Vinylbenzyldialkylsulfoniumsalzen, die stabilisierende pH-unabhängige ionische Gruppen enthalten, gepfropft ist, wobei die hydrophoben Monomere in einem Gewichtsverhältnis von 1:1 bis 10:1 bezüglich der hydrophoben Monomere zu dem hydrophilen Monomer vorliegen, ein wasserunlösiches organisches Landwirtschaftspestizid, ein Kompatibilisierungsmittel für das Pestizid, ein nichtionisches oberflächenaktives Mittel und Wasser, wobei die mit Wasser verdünnte Formulierung nicht absitzt und gefrier-tau-stabil ist und worin die Teilchengrößen der so gebildeten Öl-in-Wasser-Emulsion weniger als 500 Nanometer (5.000 Å) sind.

11. Wasserverdünnte Formulierung nach Anspruch 10, worin das wasserunlösliche Landwirtschaftspestizid ein Mitglied der Gruppe, bestehend aus Alachlor, Chlorpyrifos, Chlorpyrifos-Methyl, Fenarimol, Triallat und Trifluralin, ist.

12. Wasserverdünnte Formulierung nach Anspruch 10 oder 11, welche auch mindestens ein Formulierungsadditiv der Gruppe, bestehend aus Neutralisierungsmitteln, Färbe- und Geruchsmaskierungsmitteln, Gefrier-Tau-Mitteln und Antischaummitteln, umfaßt.

13. Verfahren zur Bekämpfung des Wachstums von Landwirtschaftsschädlingen in Blatt- und Bodenumgebungen, umfassend das Kontaktieren der Schädlinge und ihrer Blatt- und Bodenumgebungen mit einer pestizid wirksamen Menge einer wässrigen Formulierung, umfassend ein Gemisch von Wasser und einem wasserunlöslichen organischen Pestizid mit einem Kompatibilisierungsmittel für das Pestizid, ein amphipathisches Pfropfcopolymer mit einer Ladungsdichte von 0,5 bis 1,5 mÄq pro Gramm Polymer und einem Molekulargewicht von zwischen 5.000 und 250.000, umfassend ein hydrophobes Copolymergrundgerüst, das hergestellt ist aus mindestens zwei ethylenisch ungesättigten hydrophoben Monomeren aus der Gruppe, bestehend aus Alkylacrylaten, Alkylmethacrylaten und Styrolverbindungen, wobei das Polymer Pfropfstellen enthält, an welche mindestens ein ethylenisch ungesättigtes hydrophiles Monomer aus der Gruppe, bestehend aus den Sulfoalkylacrylaten, den Sulfoalkylmethacrylaten, den Acrylamidoalkylsulfonsäuren, den Methacrylamidoalkylsulfonsäuren, den Styrolsulfonaten und den Salzen dieser Gruppen, vinylsubstituierten quarternären Ammoniumsalzen und Vinylbenzyldialkylsulfoniumsalzen, die stabilisierende pH-unabhängige ionische Gruppen enthalten, gepfropft ist, wobei die hydrophoben Monomere in einem Gewichtsverhältnis von 1:1 bis 10:1 bezüglich der hydrophoben Monomere zu dem hydrophilen Monomer vorliegen, und ein nichtionisches oberflächenaktives Mittel.

14. Verfahren nach Anspruch 13, worin das wasserunlösliche organische Pestizid ein Mitglied der Gruppe, bestehend aus Alachlor, Chlorpyrifos, Chlorpyrifos-Methyl, Fenarimol, Triallat und Trifluralin, ist.

15. Verfahren zum Verpacken von im wesentlichen nicht wässrigen Formulierungen zur sicheren und bequemen Handhabung, umfassend das Einschließen einer pestiziden Konzentratformulierung nach Anspruch 6 in einem Behältnis, das aus einem zumindest teilweise wasserlöslichen Material besteht.

## Revendications

1. Procédé de préparation de copolymères de greffage amphiphiles ayant une densité de charge allant de 0,5 à 1,5 méq/gramme de polymère et une masse molaire allant de 5 000 à 250 000, lequel procédé comprend le fait

- d'ajouter à un milieu réactionnel, au moins deux monomères hydrophobes à insaturation éthylénique choisis dans le groupe formé par les acrylates d'alkyle, les méthacrylates d'alkyle et les composés styréniques, et au moins un monomère hydrophile à insaturation éthylénique choisi dans le groupe formé par les acrylates de sulfoalkyle, les méthacrylates de sulfoalkyle, les acides acrylamidoalcane-sulfoniques, les acides méthacrylamidoalcane-sulfoniques, les styrène-sulfonates et les sels de tels composés, des sels d'ammonium quaternaire à substituant vinyle et les sels de vinylbenzyldialkylsulfonium, au moins un des monomères hydrophobes étant un monomère permettant un greffage et les monomères hydrophiles comportant au moins une fonctionnalité anionique et/ou cationique indépendante du pH, ou un groupe non ionique après la réaction qui peut être converti en un dérivé ionisé indépendamment du pH, lesdits monomères hydrophobes étant présents en un rapport en poids compris entre 1/1 et 10/1 (monomères hydrophobes au monomère hydrophile),

- d'effectuer la polymérisation radicalaire desdits monomères et
- de récupérer le copolymère de greffage amphiphile ainsi préparé dans une solution contenant moins de 15 % en poids d'eau.

**2.** Procédé selon la revendication 1 dans lequel lesdits monomères sont ajoutés simultanément.

**3.** Procédé selon la revendication 1 comprenant une première étape de polymérisation radicalaire d'une solution comprenant lesdits monomères hydrophobes à insaturation éthylénique, suivie de l'addition dudit ou desdits monomère(s) hydrophile(s) à insaturation éthylénique au mélange contenant le produit de polymérisation de ladite première étape, puis une deuxième étape de polymérisation dudit mélange.

**4.** Procédé selon l'une quelconque des revendications 1, 2 ou 3 dans lequel le milieu réactionnel contient un agent tensioactif non ionique ayant une valeur de BHL (balance hydro-lipophile) allant de 8 à 20.

**5.** Procédé selon l'une quelconque des revendications 1, 2, 3 ou 4 dans lequel le milieu réactionnel contient un solvant ayant un paramètre de solubilité compris dans la gamme allant de 16,4 à 28,7 $(J/m^3)^{0,5}.10^{-3}$ (8 à 14 $(cal/cm^3)^{0,5}$).

**6.** Formulation concentrée, diluable, essentiellement non aqueuse d'un pesticide agricole contenant moins de 15 % d'eau, qui ne sédimente pas et est stable vis-à-vis du gel-dégel, et qui comprend

- un copolymère de greffage amphiphile ayant une densité de charge allant de 0,5 à 1,5 méq/gramme et une masse molaire comprise entre 5 000 et 250 000 comprenant un squelette copolymère hydrophobe préparé à partir d'au moins deux monomères hydrophobes à insaturation éthylénique choisis dans le groupe formé par les acrylates d'alkyle, les méthacrylates d'alkyle et les composés styréniques, ledit squelette copolymère hydrophobe contenant des sites de greffage sur lesquels est greffé au moins un monomère hydrophile à insaturation éthylénique choisi dans le groupe formé par les acrylates de sulfoalkyle, les méthacrylates de sulfoalkyle, les acides acrylamidoalcane-sulfoniques, les acides méthacrylamidoalcane-sulfoniques, les styrène-sulfonates et les sels de tels composés, des sels d'ammonium quaternaire à substituant vinyle et les sels de vinylbenzyldialkylsulfonium, contenant des groupes stabilisants ionisés indépendamment du pH, lesdits monomères hydrophobes étant présents en un rapport en poids compris entre 1/1 et 10/1 (monomères hydrophobes au monomère hydrophile),
- un pesticide organique agricole insoluble dans l'eau,
- un agent compatibilisant du pesticide, et
- un agent tensioactif non ionique,

ladite formulation, lorsqu'elle est diluée avec de l'eau, formant une émulsion huile-dans-l'eau et les particules de ladite émulsion ayant une taille inférieure à 500 nanomètres (5000 Å).

**7.** Formulation selon la revendication 6 dans laquelle le pesticide agricole, organique, insoluble dans l'eau est un membre du groupe formé par l'alachlor, le chlorpyrifos, le chlorpyrifos-méthyle, le fénarimol, le triallate et la trifluraline.

**8.** Formulation selon la revendication 6 ou 7 comprenant jusqu'à 65 % en poids de pesticide et moins de 6 % en poids d'eau.

**9.** Formulation selon la revendication 6, 7 ou 8 contenant également au moins un additif de formulation choisi dans le groupe formé par les agents neutralisants, les agents colorants ou masquant l'odeur, les agents de gél-dégél et des agents anti-mousse.

**10.** Formulation de pesticide agricole diluée dans l'eau comprenant un mélange

- d'un copolymère de greffage amphiphile ayant une densité de charge allant de 0,5 à 1,5 méq/gramme de

polymère et une masse molaire allant de 5 000 à 250 000, comprenant un squelette hydrophobe copolymère préparé à partir d'au moins deux monomères hydrophobes à insaturation éthylénique choisis dans le groupe formé par les acrylates d'alkyle, les méthacrylates d'alkyle et les composés styréniques, ledit squelette hydrophobe copolymère contenant des sites de greffage sur lesquelles est greffé au moins un monomère hydrophile à insaturation éthylénique choisi dans le groupe formé par les acrylates de sulfoalkyle, les méthacrylates de sulfoalkyle, les acides acrylamidoalcane-sulfoniques, les acides méthacrylamidoalcane-sulfoniques, les styrène-sulfonates et les sels de tels composés, des sels d'ammonium quaternaire à substituant vinyle et les sels de vinylbenzyldialkylsulfonium, contenant des groupes stabilisants ionisés indépendamment du pH, lesdits monomères hydrophobes étant présents en un rapport en poids compris entre 1/1 et 10/1 (monomères hydrophobes au monomère hydrophile),

- d'un pesticide organique agricole insoluble dans l'eau,
- d'un agent compatibilisant du pesticide, et
- d'un agent tensioactif non ionique, et
- de l'eau,

ladite formulation diluée dans l'eau étant stable vis-à-vis de la sédimentation et résistant au gel-dégel, et les particules de l'émulsion huile-dans-l'eau ainsi formée ayant une taille inférieure à 500 nanomètres (5000 Å).

**11.** Formulation diluée dans l'eau selon la revendication 10 dans laquelle le pesticide agricole, organique, insoluble dans l'eau est un membre du groupe formé par l'alachlor, le chlorpyrifos, le chlorpyrifosméthyle, le fénarimol, le triallate et la trifluraline.

**12.** Formulation selon la revendication 10 ou 11 contenant également au moins un additif de formulation choisi dans le groupe formé par les agents neutralisants, les agents colorants ou masquant l'odeur, les agents de gél-dégél et les agents anti-mousse.

**13.** Procédé pour limiter le développement de maladies agricoles dans un environnement constitué par les feuilles et le sol, lequel procédé comprend le fait de mettre en contact lesdits agents de la maladie et l'environnement constitué par les feuilles et le sol avec une quantité pesticide suffisante d'une formulation aqueuse comprenant un mélange

- d'eau,
- d'un pesticide organique insoluble dans l'eau, en présence
- d'un agent compatibilisant du pesticide,
- d'un copolymère amphiphile de greffage ayant une densité de charge allant de 0,5 à 1,5 méq/gramme de polymère et une masse molaire allant de 5 000 à 250 000, comprenant un squelette hydrophobe copolymère préparé à partir d'au moins deux monomères hydrophobes à insaturation éthylénique choisis dans le groupe formé par les acrylates d'alkyle, les méthacrylates d'alkyle et les composés styréniques, ledit squelette hydrophobe copolymère contenant des sites de greffage sur lesquelles est greffé au moins un monomère hydrophile à insaturation éthylénique choisi dans le groupe formé par les acrylates de sulfoalkyle. les méthacrylates de sulfoalkyle, les acides acrylamidoalcane-sulfoniques, les acides méthacrylamidoalcane-sulfoniques, les styrène-sulfonates et les sels de tels composés, des sels d'ammonium quaternaire à substituant vinyle et les sels de vinylbenzyldialkylsulfonium, contenant des groupes stabilisants ionisés indépendamment du pH, lesdits monomères hydrophobes étant présents en un rapport en poids compris entre 1/1 et 10/1 (monomères hydrophobes au monomère hydrophile), et
- d'un agent tensioactif non ionique.

**14.** Procédé selon la revendication 13 dans lequel le pesticide organique insoluble dans l'eau est un membre du groupe formé par l'alachlor, le chlorpyrifos, le chlorpyrifos-méthyle, le fénarimol, le triallate et la trifluraline.

**15.** Procédé d'emballage de formulations essentiellement non aqueuses en vue d'une manipulation sure et commode, comprenant le fait d'enfermer dans un sachet constitué d'un matériau au moins partiellement soluble dans l'eau, une formulation pesticide concentrée définie dans la revendication 6.